Europäisches Patentamt

European Patent Office

Office européen des brevets

(19)

(11) Publication number: **0 396 390**

**A1**

(12) **EUROPEAN PATENT APPLICATION**

(21) Application number: **90304737.1**

(22) Date of filing: **01.05.90**

(51) Int. Cl.⁵: **C05F 3/00, C02F 11/12, F26B 7/00**

(30) Priority: **03.05.89 KR 895943**

(43) Date of publication of application:
**07.11.90 Bulletin 90/45**

(84) Designated Contracting States:
**AT BE CH DE DK ES FR GB GR IT LI NL SE**

(71) Applicant: **Kim, Hong-gi**
**13-1304 Karak 1-Cha Hyeondae APT, 3,**
**Munjeong-Dong**
**Songpa-Ku, Seoul(KR)**

(72) Inventor: **Brams, Soren**
**Hvamvej 58**
**DK-9620 Alestrup(DK)**

(74) Representative: **Holmes, Michael John et al**
**Frank B. Dehn & Co. Imperial House 15-19**
**Kingsway**
**London WC2B 6UZ(GB)**

(54) **Method for processing organic waste and apparatus therefor.**

(57) A method for processing organic waste comprises separation into a liquid portion and a solid portion, and heat drying only the solid portion. The apparatus for carrying out the method comprises a loading means (2) for supplying organic waste at a predetermined rate; a separating means (4) for separating the organic waste into liquid and solid portions; a heat-drying means (6) for heating and drying the solid portion separated; solid discharging means (6c) for conveying and discharging the dried solid portion; a settling means (13) for settling the sludge contained in the liquid portion separated; and a water purifying means (17) for discharging the supernatant in the form of clean water. The method and apparatus of the present invention reduce processing time, power and fuel consumption, and make it possible to avoid environmental pollution as well as producing useful final products.

## METHOD FOR PROCESSING ORGANIC WASTE AND APPARATUS THEREFOR

The present invention relates to a method for processing organic waste and an apparatus therefor, and particularly to a method for processing organic waste containing organic substances by drying treatment so as to obtain organic fertilizer or livestock feed and clean water and apparatus for carrying out the processing.

Examples of organic wastes containing organic substances are livestock wastes such as cattle faeces, human night soil, sludge from sewage treatment plant and waste water from food industries such as the bakery or brewing industries, as well as other high concentration organic wastes. Hereinafter, the term "organic wastes" comprehensively encompasses all the above mentioned and other organic waste materials. If the organic wastes are discharged directly to the environment, such as into a river, they cause environmental pollution, for example water pollution. Furthermore, the organic waste may readily ferment and rot, giving out a bad smell, since it is a rich source of organic substances.

Especially in the case of livestock wastes such as cattle faeces, it is desirable not only to prevent the environmental pollution created by such wastes, but also to consider such waste as a useful organic resource and to recycle and use it as an organic fertilizer on pasture and farmland for enhancing and maintaining the fertility thereof. To estimate the cattle faeces based on the content of nitrogen N, phosphorus P and potassium K, the three main elements of fertilizer, fresh cattle faeces is richest in these elements and therefore the most useful. However, the cattle faeces itself causes many problems in management of cattle and farmland, handling difficulties due to its stickiness and high liquid content, generation of malodor due to its high content of ammonia or hydrogen sulfide and the like, and sanitary problems created by spreading colon bacilli, spawns of parasites, seeds of weeds.

Therefore livestock wastes are generally used as organic fertilizer not in its raw state but after appropriate processing, for example drying, manuring or liquefaction treatment. In manuring treatment, the absorbing materials for the manure, for example paddy straw, wheat straw or hay, are in fact useful raw fodder materials, and so using them to make manure will not be appropriate. Furthermore, liquified manure cannot be used in the winter season, and so a very large storage tank is required to contain the manure during this season. Thus, the use of liquified manure has recently become rare.

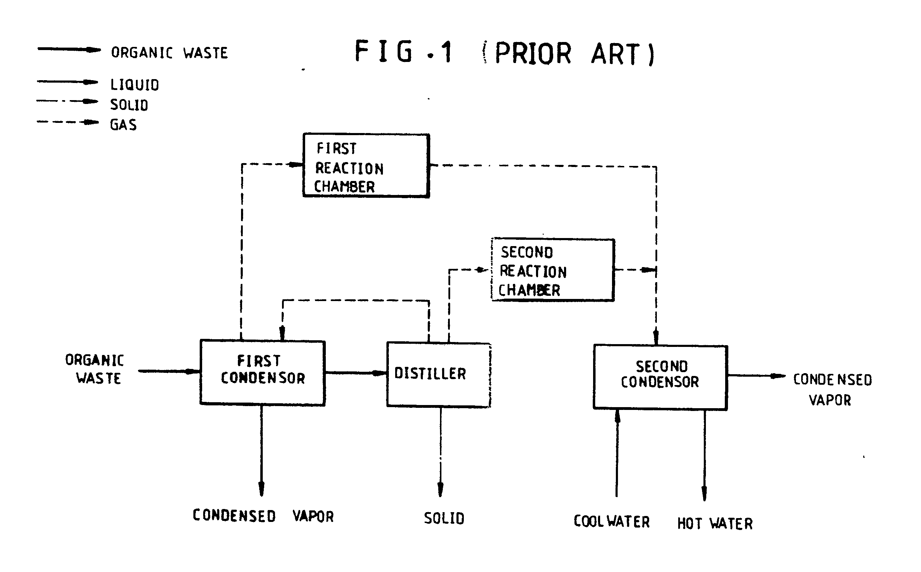

Therefore, the recent trend in processing organic wastes such as livestock wastes, to organic fertilizer has been focussed on drying treatment. An example of the method for processing organic wastes by drying treatment, is disclosed in Danish Patent Application No. 973/87 filed on January 25, 1987 by the present inventor, which is shown as a block diagram in Figure 1.

In Figure 1, the organic waste fed into the first condenser is heated in a distiller to discharge the liquid content in the form of vapor so that the organic waste is enriched to increase the solid content. The discharged vapor is passed through the first reaction chamber containing an acid solution, so that organic substances such as ammonia present in the vapor may be extracted into the acid solution in the form of a salt thereof. Thereafter, the acid solution is fed to the distiller, while the vapor from which organic substances have been extracted is fed to the first condenser where the vapor is condensed with preheating the newly incoming organic waste by mutual heat-exchange, and then is discharged to the environment in the form of condensed vapor.

Meanwhile, the vapor generated from the newly incoming organic waste upon preheating is passed through the second reaction chamber which has the same consitutution and function as the first reaction chamber, so that the organic substances of the vapor are purified in the same manner as described above. Thereafter, the purified vapor is fed to the second condenser, where the said vapor is to be condensed with heating incoming cold water by mutual heat-exchange, then is discharged to the environment in the form of condensed vapor.

However, the above described method of drying treatment has many disadvantages. As the method is to enrich the dry content of the organic wastes through distillation by heating, a long processing time and much heat is required to carry out the method. Furthermore, energy consumption is very high due to the large heat loss. Moreover, it is impossible to reduce the total bulk of the apparatus properly as the working fluid in the system is vapor. Moreover, a large amount of the organic substances such as ammonia are generated from the organic wastes by the distillation, so that the required amount of acid, for example sulfuric acid, has to be large. This results in the acid solution containing the ammonia fed into the distilling organic waste in a large amount thereby making the acidity of the final dried products very high, and so of no use as fertilizer.

On the other hand, if the amount of acid used is lowered to reduce the acidity of the final dried products, the amount of organic substances such as ammonia in the discharged vapor or water is increased to the extent that it is not fit for drinking. This discharged water then cannot be used as feed water for cattle or for other purposes requiring clean water. Furthermore, exhaust gas from the fuel used for drying is directly discharged into the air, and causes air pollution.

Thus, the conventional method requires a large installation space and operating expenses, makes it difficult to fully utilize the final products, and causes various kinds of environmental pollution, so that it may not be suitable for the processing of organic wastes, especially in livestock farming.

According to one aspect of the present invention there is provided a method for processing organic waste comprising:
the separation of said organic waste into a liquid portion and a solid portion; and
the heat drying of only said solid portion.

Using such a method, the processing time is shortened and operating expenses are lowered since less fuel is required. Furthermore, it allows a reduction in the size of the system and appropriate use of the final product can be ensured without causing environmental pollution.

The separated liquid portion may be heated simultaneously with the solid portion by the excess heat generated during the heating of the solid portion, and preheats the incoming organic wastes, then is settled and purified to be discharged in the form of clean water. Such clean water may be used as drinking water for cattle or for other purposes requiring clean water.

Furthermore, the vapor and released gases generated during the separation and heat-drying procedures are discharged after being purified. In the purifying procedure, even if these gases are allowed to pass through the acid solution as in the conventional method, the amount of discharged vapor and gases is small and the concentration of the gases is high, so that the amount of acid required is small due to the high degree of reaction thereof and the acidity of the final products is maintained at a suitable level.

According to the method of the present invention, the speed of drying processing is very high, and the working fluid contains only a small amount of gas such as vapor, thereby allowing a remarkable reduction in the volume of the apparatus for carrying out the method.

According to a further aspect of the present invention there is provided an apparatus for processing organic waste comprising:
loading means for temporarily storing organic waste and discharging organic waste at a predetermined rate;
separating means for separating said organic waste, supplied from said loading means, into a solid portion and a liquid portion;
heat drying means for heating and drying said solid portion;
solid discharging means for conveying and discharging said solid portion which has been dried by said heat drying means;
settling means for settling sludge present in said liquid portion;
water purifying means for purifying the supernatant liquor in said settling means to discharge clean water;
all the above-mentioned means being connected by means of conduits.

In addition, gas purifying means for collecting and purifying the vapor and gases generated from the separating means and the heat drying means may preferably be provided. A preheating means for preheating the organic wastes to be induced to the separating means by recovering the excess heat from the heat drying means may also be provided in addition.

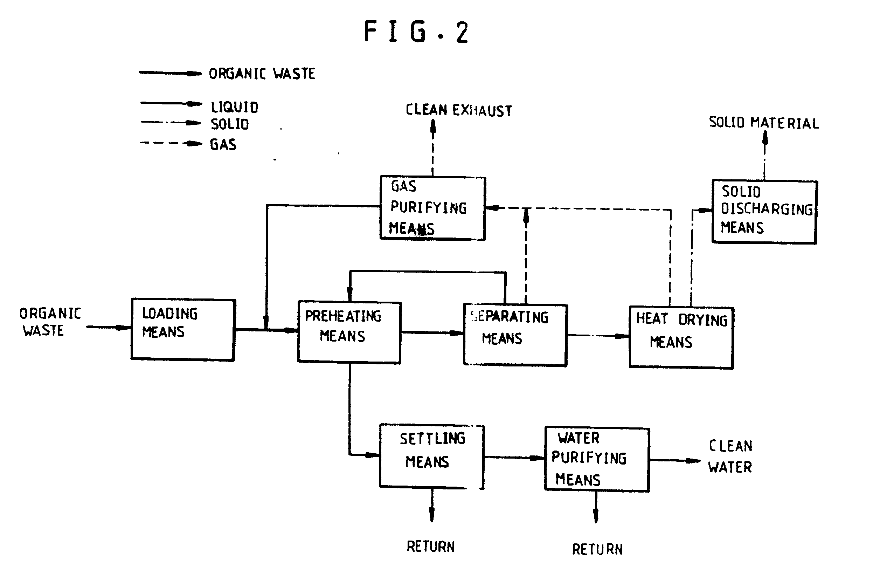

Figure 2 shows a block diagram of an apparatus for processing organic wastes according to the present invention.

The organic waste which is collected in a storage means (not shown) for appropriate decay and fermentation therein, is transferred to the loading means and temporarily stored therein. The organic waste in the loading means is fed to a separating means through a preheating means at the rate corresponding to the proceeding rate of the foregoing procedures. The organic waste is separated into liquid and solid portions at the separating means, then the solid portions are transferred to the heat drying means and heated to be dried by an appropriate heat source, and finally discharged as a dried solid material through the solid discharging means.

On the other hand, the liquid portion separated by the separating means is heated by the excess heat of the heat drying means which heat-dries the solid portion, and transferred to the preheating means. The heated liquid portion preheats newly incoming organic waste by heat exchange therein, then goes through the settling means and the water purifying means to be discharged to the outside of the apparatus as clean water. Here, the sludge remaining after purifying the liquid portion in the settling means and water purifying means, is returned to the separating means to be separated together with newly incoming organic waste, and is thereby dried and finally discharged.

Meanwhile, the vapor and released gases generated from the separating means or heat drying means are collected in the gas purifying means to be discharged as clean gas after removing organic substances present therein, while the organic substances which have been removed are returned to the separating means to be mixed with the separated solid portion. Here, the organic substances which are mixed with the solid portion are mainly ammonium salts, thereby enhancing the quality of the final product as an organic fertilizer.

The advantages of the present invention will be made more apparent by the following description of preferred embodiments thereof with reference to the accompanying drawings in which:

Figure 1 is a block diagram for a conventional processing apparatus;

Figure 2 is a block diagram for the apparatus for processing organic wastes according to the present invention;

Figure 3 is a system diagram of the present invention, in which the block diagram of Figure 2 is more specifically embodied; and

Figure 4 is a system diagram of another embodiment of the apparatus according to the present invention.

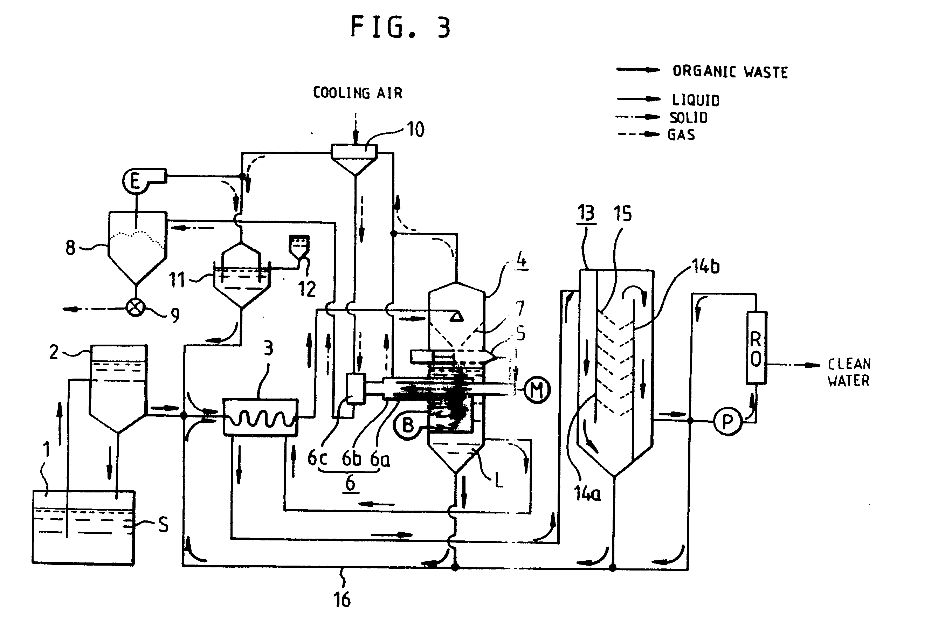

Figure 3 illustrates a system diagram for a specific embodiment of the apparatus of Figure 2. For the sake of convenience, this embodiment now will be called "reverse osmotic type" in order to distinguish it from the second embodiment which will be described later, in which the water purifying means is of a distilling type.

The organic waste S is collected in a storage tank 1 and undergoes appropriate preprocessing, such as settling and fermentation, therein. After that, the organic waste is induced to a loading tank 2 for temporary storage and then transfer to subsequent procedures at a predetermined rate.

Here, the organic wastes can be directly collected into the loading tank 2 without any preprocessing. But in this case, foreign materials such as grit or wooden chips cannot be removed properly so that the conduits of the apparatus are apt to be blocked. Especially in the case of organic waste which is livestock waste such as cattle faeces, since the waste contains a great deal of lignin or cellulose which cannot be easily decomposed by heat, blockage of the conduits is also probable. Therefore, it is desirable to subject the organic waste to settling and fermentation in storage tank 1 in advance.

Depending on the proceeding conditions of the foregoing procedures of the apparatus, the organic wastes are induced to a preheater 3 from the loading tank at a predetermined rate to be preheated thereat by a heat source, which will be described later.

The preheated organic wastes are transferred to the separating means and heat drying means, both of which are integrally constituted within a tank for the sake of compactness and economy of energy consumption in this embodiment.

Preferably, the separating means is provided with a separating tank 4 and a dewaterer 5 installed in the tank, and the dewaterer 5 separates the induced organic wastes into a solid portion and a liquid portion by a squeezing action. The liquid portion L is made to fall into the lower part of the separating tank 4 and stays thereat, while the solid portion is transferred to the heat drying means. The heat drying means is provided with a double-pipe heating drier 6 which is located at a the level below the surface of the liquid portion L. It is desirable to maintain the inner space of the separating tank 4 in a pressurized state so as to prevent boiling of the liquid portion L.

The dewaterer 5 used as separating means is preferably a piston press type dewaterer provided with a hydraulic actuator and a porous cylinder, which decreases in diameter to the trailing end thereby substantially forming a conical end shape. Above the inlet of the dewaterer 5, a screen hopper 7 consisting of porous plates is preferably installed for screening incoming organic wastes to carry out preliminary dewatering.

The dual-pipe heating drier 6, which constitutes the heat drying means, consists of an inner pipe 6a and an outer pipe 6b. The inner pipe 6a allows the solid portion separated by the separating means to pass through to be heat dried. The outer pipe 6b surrounds the inner pipe 6a and is exposed to the fire chamber of a burner B thereby allowing the heat from the chamber to pass through the space between the inner and outer pipes, and the external surface of the outer pipe 6b is contacted with the liquid portion L. The inner and outer pipes 6a, 6b are joined at the outlet ends to form a mixing chamber 6c.

An appropriate conveying means such as a screw conveyor (not shown) is preferably installed within the inner pipe 6a, and here reference symbol M indicates a driving means, such as a motor, for the conveying means.

The solid portion after heat drying processing will be discharged through the solid discharging means to the outside of the apparatus. The solid discharging means preferably consists of a cyclone 8 for separating gases from the solid portion, a blower E for providing a vacuum to transfer the solid portion and to separate the gases therefrom.

A solid discharging valve 9 for discharging the solid portion is installed under the cyclone 8. The solid discharging valve is preferably a motor driven rotary valve.

Meanwhile, vapor and released gases from the separating tank 4 and the heat drying means together with the combustion gas from the burner B, are induced to a gas purifying means. The gas purifying means preferably consists of a vapor cooler 10 and a purifying tank 11 which is connected with an acid supply tank 12. The vapor cooler 10 cools the vapor and released gases to be condensed by inducing external cooling air, and supplies the gases to the purifying tank 11, which is connected to the acid supply tank 12 which is arranged to store an acid solution and to supply a solution of sulfuric acid or phosphoric acid at a predetermined rate therefrom.

As the requirement for phosphorus P and corresponding absorbtivity are high in plants, the acid solution is preferably that of phosphoric acid.

Meanwhile, the liquid portion L separated by the separating tank 4 and heated by the excess heat of the heat drying means, is induced to the settling means through preheater 3. The settling means comprises two dividing plates 14a, 14b which create a flow path which zigzags up and down, and at a position upstream of the flow path, a plurality of porous impeding plates 15 are stacked. After the settling of the liquid portion, the supernatant thereof is induced to a water purifying means. In this embodiment, the water purifying means consists of a reverse osmotic filter RO and a pressure pump P for applying pressure to the filter RO.

The sludge accumulated at the bottom of the separating tank 4 and the settling tank 13, together with residue after filtering clean water are returned to the preheating means through a sludge return conduit 16 to be finally discharged as solid material.

The operation of the present embodiment will now be described in detail.

The organic waste supplied from the loading tank 2 is preheated to about 70 to 90°C on passing through the preheater 3 and is then induced to the separating tank 4. In the separating tank, the organic waste undergoes preliminary dewatering upon passing through the screen hopper 7, and is then separated by dewaterer 5; the water content of the organic waste is thereby reduced to about 40 to 50%.

Thereafter, the separated organic waste is heated to about 90 to 140° on passing through the double pipe heating drier 6, and then mixed with dry air from the vapor cooler 10 at the mixing chamber 6c. As a result, it is thereby dried to a water content of 15%.

During the heat drying procedures, seeds of weeds, spawns of parasites, colon bacilli and the like are exterminated by the high temperature, the resulting solid portion being properly sterilized. Moreover, the solid portion is dried to a level sufficient to enable it to be transferred by a powder transporting method. Thus, the solid portion is induced to the cyclone 8 by means of a vacuum supplied by blower E and the pressure of dry air, then is de-aerated.

Finally, it is discharged to the outside of the apparatus through solid discharge valve 9, in a state ready for use as an organic fertilizer.

Meanwhile, the interior of the separating tank 4 is heated up to about 80 to 130°C by the heat emitted from the outer pipe 6b of the dual-pipe heating drier 6. Under these conditions, if the liquid portion is boiled to generate vapor and gases, the gaseous fraction of working fluid is increased and causes difficulties in construction of the apparatus since a larger volume apparatus is required. Therefore, the interior of the separating tank 4 is kept under a pressure sufficient to prevent boiling of the liquid. For example, the boiling temperature under 2 atm is about 120°C, and under 3 atm 130°C. Therefore, boiling is prevented by applying a pressure of about 2 to 3 atm, preferably, to the interior of the separating tank 4.

The vapor and released gases generated from the separating tank 4 together with the vapor from the heat drying procedure, contain a large amount of organic substances such as ammonia. The vapor and gases are transferred to the vapor cooler 10, and are cooled to condensation by cooling air induced from the exterior. In this procedure, ammonia gas $NH_3$ having high solubility in water is dissolved in the condensed water, thereby facilitating the conversion to ammonium salt in the gas purifying tank 11. Here, the cooling air is heated by absorbing the heat of condensation of the vapor to lower the relative humidity, and then is induced to the mixing chamber 6c of the dual-pipe heating drier 6 to facilitate the drying and transference of the solid portion.

The vapor and gases, after being cooled, are induced to the gas purifying tank 11 where they are deprived of dust and malodor, while the organic substances, especially ammonia present in the gases, are recovered in the form of ammonium salt. As the formation of ammonium salt is increased, the acidity in the gas purifying tank 11 will be gradually lowered. Therefore, an amount of acid is supplied from the acid supply tank 12 at a rate sufficient to maintain an appropriate acidity of pH 5 to 7. Accordingly, the exhaust air will be clean air without dust or malodor, while the acid solution containing the recovered organic substances is returned to the preheater 3, where it is mixed with newly incoming organic waste to increase the nitrogen content thereof.

Meanwhile, combustion gas generated from burner 8 is also induced to the gas purifying tank 11 together with the vapor and released gases. It is purified therein and discharged devoid of sulfurous acid gas, carbon monoxide, dusts and the like. In the present invention, the sulfurous acid gas has an important role in converting ammonia into ammonium salt, as does sulfuric acid, whilst it has previously been one of the principal air pollutants.

On the other hand, the liquid portion which is heated to a temperature of about 80 to 130°C by excess heat from the double-pipe heat drier 6, is cooled to about 30 to 45°C after preheating incoming organic waste to about 70 to 90°C at the preheater 3, and then is induced to the settling tank 13. When the liquid portion passes through the settling tank upstream, the floating particles in the liquid portion contact one another and are coagulated due to the presence of the impeding plates 15 which are inclined downwardly; the coagulated particles are settled to the bottom of the settling tank 13 to form sludge as their coagulated mass grows. The sludge is returned to the preheater 3 through the sludge return conduit 16 to be mixed with newly incoming organic waste. After settling of the sludge, the supernatant is subjected to a certain pressure from the pressure pump P, and is filtered by the reverse osmotic filter RO, where inorganic salts, such as sodium chloride, which cannot be removed by the settling, and other remaining organic or inorganic substances are removed. The supernatant is thereby discharged as clean water. The filtered organic and inorganic substances are returned to the preheater 3 through the sludge return conduit 16, to be mixed with newly incoming organic waste.

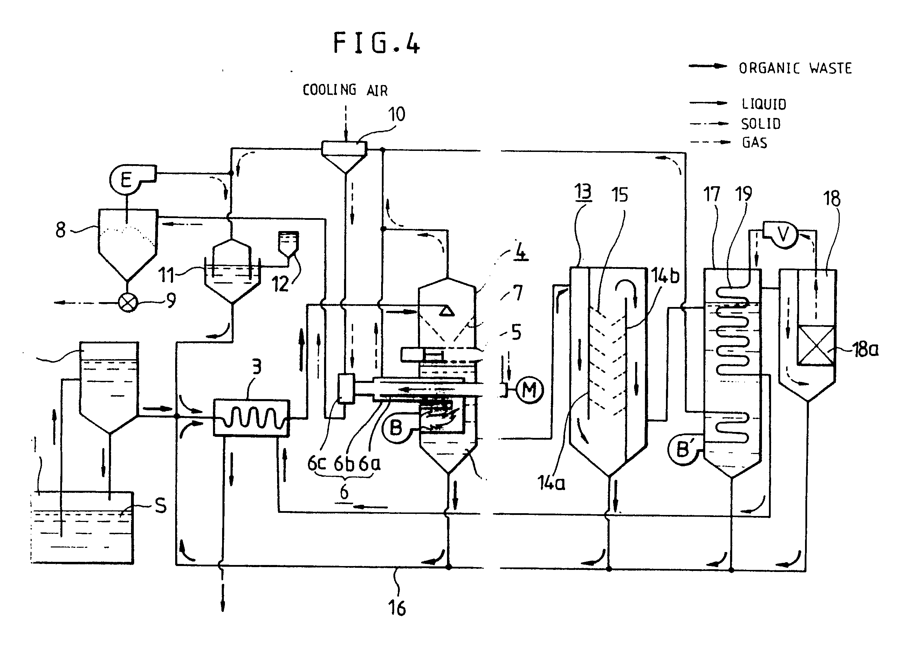

Figure 4 illustrates another embodiment of the apparatus according to the present invention, in which the water purifying means is of the distillation type.

In this embodiment, the supernatant at about 120°C which is heated in the separating tank 4 and settled in the settling tank 13, is induced to a distiller 17, where the supernatant is distilled by additional heating by a distillation burner B′ as an auxiliary heat source. Residual ammonia present in the supernatant is separated and condensed by gas absorbing material 18a upon passing through a gas separator 18, which settles at the bottom of the gas separator 18, then is returned through the sludge return conduit 16 and mixed with incoming organic waste. Meanwhile, the vapor from which ammonia has been removed is condensed by the condenser 19 by releasing condensation heat, and the condensed liquid which has a temperature of about 120°C, for example, is induced to the preheater 3 to preheat incoming organic waste, and is then discharged as clean water. Reference symbol V indicates a blower which applies a vacuum to the distiller 17 and the gas separator 18, and provides high pressure to the condenser 19 for promoting distillation and condensation.

This embodiment is almost the same as the first embodiment, the reverse osmotic type, except that the water purifying means consists of a distillation type apparatus, and that the waste heat of water condensation is utilized for preheating the incoming organic waste. Therefore, a detailed description of the constitution and operation thereof will not be given.

The method for processing organic waste and the apparatus therefor according to the present invention have several advantages.

Firstly, the drying procedure does not utilise conventional distillation of the whole organic waste, but involves drying only the solid portion after separation from the liquid portion, thereby conspicuously reducing the processing time, the power required and the fuel consumption. Comparative tests have been carried out between the conventional apparatus and the apparatus of the reverse osmotic type according to the present invention, both apparatus having the same capacity. It was found that the required time for processing organic waste to solid material having a water content of 15%, was about 4 hours using the conventional apparatus, but only 50 minutes using the apparatus according to the present invention. Furthermore, the power required was also remarkably reduced from 35KWH for the conventional apparatus to 25KWH for the apparatus according to the present invention, and the fuel consumption of the present invention was about 2 to 5Kg per 1 ton in the case of light-oil.

Moreover, the organic waste is not distilled, and so the amount of vapor and released gases is very small, i.e. most of the working fluid in the present invention is liquid phase. Therefore, the whole volume of the apparatus can be reduced to such an extent that it may be installed in a trailing container. Moreover, the reaction rate is very high owing to the liquid phase. The amount of acid required for absorbing organic substances is reduced remarkably, with the result that the acidity of the final solid product is lowered sufficiently to enable it to be used directly as an organic fertilizer.

Furthermore, unlike the conventional method, the discharged water is free of organic or inorganic substances thereby making it possible to use it for drinking or other purposes requiring clean water. In addition, the high temperature vapour generated from conventional apparatus caused thermal pollution especially in the summer season when the heat of vapor cannot be used for other purposes, for example the heating of cool water, whereas the apparatus according to the present invention does not produce such excess heat thereby realizing economy of energy consumption. Furthermore, air pollution due to the exhaust gas from fuel combustion will not arise.

In the above description, the present invention is described mainly in its application to processing livestock waste to obtain organic fertilizer and clean water. However, in the case of processing waste from foodstuff industries such as the baking or brewing industries, the thus obtained solid material can be used as a raw fodder which contains profuse organic substances, and the discharged water can be used for mixing fodders or as drinking water for cattle.

Furthermore, the present invention can be applied in the manufacture of fish meal, that is, if cut blocks of sardine or anchovy are induced into the apparatus, the solid material obtained can be used for making fish meal.

The present invention can be applied to various other industrial fields without departing from the scope of the invention.

Thus, the method for processing organic waste and the apparatus therefor according to the present invention contribute to recycling useful resources without causing environmental pollution.

## Claims

1. A method for processing organic waste comprising:
the separation of said organic waste into a liquid portion and a solid portion; and
the heat drying of only said solid portion.

2. A method as claimed in claim 1, wherein said separation is carried out by filter pressing said organic waste.

3. A method as claimed in claim 1 or claim 2, wherein said liquid portion is heated simultaneously with said separated solid portion, and said heated liquid portion preheats said organic waste.

4. A method as claimed in any of the preceding claims, wherein said liquid portion is discharged after a purification treatment.

5. A method as claimed in claim 4, wherein said purification treatment comprises removing sludge present in said liquid portion by settling, with purification of the supernatant.

6. A method as claimed in claim 5, wherein said supernatant is purified by filtration.

7. A method as claimed in claim 5, wherein said supernatant is purified by distillation.

8. A method as claimed in any of the preceding claims, wherein vapor and released gas generated during said steps of separation and heat drying are discharged after said purification treatment.

9. A method as claimed in claim 8, wherein said purification treatment comprises passing said vapor and released gases through an acid solution so that organic substances contained in said vapor and released gases are separated into said acid solution in the form of salts.

10. A method as claimed in claim 9, wherein said acid is at least one of sulfuric acid and phosphoric acid.

11. A method as claimed in claim 9 or claim 10, wherein said acid solution containing said organic substances is returned to be mixed with said organic waste.

12. An apparatus for processing organic waste comprising:
loading means for temporarily storing organic waste and discharging organic waste at a predetermined rate;
separating means for separating said organic waste, supplied from said loading means, into a solid portion and a liquid portion;
heat drying means for heating and drying said solid portion;
solid discharging means for conveying and discharging said solid portion which has been dried by said heat drying means;
settling means for settling sludge present in said liquid portion;
water purifying means for purifying the supernatant liquor in said settling means to discharge clean water;
all the above-mentioned means being connected by means of conduits.

13. An apparatus as claimed in claim 12, wherein said separating means consists of a dewaterer, and said heat drying means consists of a double pipe heating drier, each of which being installed in the upper and lower part of a separating tank respectively;
said dewaterer separating incoming organic waste into a solid portion and a liquid portion, said solid portion being transferred to said double pipe heating drier, said liquid portion being dropped and accumulated at the bottom of said separating tank;
said heat drying means being disposed below the level of said accumulated liquid portion, and including an inner pipe for receiving, transferring and drying said separated solid portion from said dewaterer, an outer pipe the outer surface of which is contacted by said liquid portion, and heat being applied between said inner and outer pipes.

14. An apparatus as claimed in claim 13, further comprising a preheater for preheating said organic waste by heat-exchanging it with the liquid portion which is returned after being heated by contacting with said outer pipe of said double pipe heating drier.

15. An apparatus as claimed in claim 13 or claim 14, wherein said dewaterer consists of a piston type filter press.

16. An apparatus as claimed in any of claims 12 to 15, wherein said settling means consists of a coagulating type settling tank having a plurality of porous impeding plates stacked therein, said liquid portion being supplied to the bottom of said tank and discharged from the top of said tank.

17. An apparatus as claimed in any of claims 12 to 16, wherein said water purifying means consists of a reverse osmotic type filter.

18. An apparatus as claimed in any of claims 12 to 16, wherein said water purifying means consists of a distiller and a condenser, said distiller distilling said liquid portion to form vapor, said condenser condensing said vapor to discharge condensed water.

19. An apparatus as claimed in any of claims 12 to 18, further comprising a gas purifying means for collecting vapor and released gases generated from said separating means and said heat drying means, and catching organic substances contained in said gases in the form of salts by passing said gases through a gas purifying tank containing acid solution, said organic salts being returned and mixed with said organic waste.

20. An apparatus as claimed in any of claims 12 to 19, further comprising a burner for applying heat between said inner and outer pipes by burning fuel, the combustion gas of said fuel being transferred to said gas purifying means and discharged after being purified with said gases.

FIG·1 (PRIOR ART)

ORGANIC WASTE
LIQUID
SOLID
GAS

EP 0 396 390 A1

# FIG.2

Legend:
- ──► ORGANIC WASTE
- ──► LIQUID
- ─·─► SOLID
- ----► GAS

ORGANIC WASTE → LOADING MEANS → PREHEATING MEANS → SEPARATING MEANS → HEAT DRYING MEANS

GAS PURIFYING MEANS → CLEAN EXHAUST

SOLID DISCHARGING MEANS → SOLID MATERIAL

PREHEATING MEANS → SETTLING MEANS → WATER PURIFYING MEANS → CLEAN WATER

SETTLING MEANS → RETURN

WATER PURIFYING MEANS → RETURN

EP 0 396 390 A1

# FIG. 3

Legend:
- → ORGANIC WASTE
- → LIQUID
- —·—→ SOLID
- ---→ GAS

COOLING AIR

CLEAN WATER

EP 0 396 390 A1

FIG.4

European Patent Office

**EUROPEAN SEARCH REPORT**

Application Number

EP 90 30 4737

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | NL-A-8 303 338 (G.J. KROMDIJK)<br>* Page 8, claims 1,2,4,6 *<br>--- | 1,2 | C 05 F 3/00<br>C 02 F 11/12<br>F 26 B 7/00 |
| X | DE-A-2 452 830 (WÄRME KRAFT GESELLSCHAFT)<br>* Page 2 * | 1 | |
| A | | 8,12,13 | |
| | --- | | |
| A | FR-A-2 260 549 (SAINT-GOBAIN TECHNIQUES NOUVELLES)<br>* Page 9, claims 1,5,6,9 *<br><br>--- | 1,4,5,7,8,12,16,18,20 | |
| A | EP-A-0 315 713 (JOSEF VAN OPBERGEN GmbH)<br>* Column 3, lines 9-37 *<br>----- | 1,4,6,17 | |
| | | | **TECHNICAL FIELDS SEARCHED (Int. Cl.5)**<br><br>C 05 F<br>C 02 F<br>F 26 B |

The present search report has been drawn up for all claims

| Place of search | Date of completion of the search | Examiner |
|---|---|---|
| THE HAGUE | 18-07-1990 | TEPLY J. |

EPO FORM 1503 03.82 (P0401)